# EUROPEAN PATENT SPECIFICATION

(11) **EP 4 270 331 B1**
(45) Date of publication and mention of the grant of the patent: **20.08.2025**
(21) Application number: 22169964.8
(22) Date of filing: 26.04.2022
(51) Int. Cl.: G06V 20/59, G06V 10/25

(54) **COMPUTER IMPLEMENTED METHOD, COMPUTER SYSTEM AND NON-TRANSITORY COMPUTER READABLE MEDIUM FOR DETECTING AN OCCUPANCY OF A SEAT IN A VEHICLE CABIN**
COMPUTERIMPLEMENTIERTES VERFAHREN, COMPUTERSYSTEM UND NICHTFLÜCHTIGES COMPUTERLESBARES MEDIUM ZUM DETEKTIEREN DER BELEGUNG EINES SITZES IN EINER FAHRZEUGKABINE
PROCÉDÉ MIS EN OEUVRE PAR ORDINATEUR, SYSTÈME INFORMATIQUE ET SUPPORT LISIBLE PAR ORDINATEUR NON TRANSITOIRE POUR DÉTECTER L'OCCUPATION D'UN SIÈGE DANS UNE CABINE DE VÉHICULE

(43) Date of publication of application: 01.11.2023
(73) Proprietor: Aptiv Technologies AG, 8200 Schaffhausen (CH)
(72) Inventor: ZHANG, Xuebing, 42119 Wuppertal (DE)
(74) Representative: Manitz Finsterwald Patent- und Rechtsanwaltspartnerschaft mbB

(56) References cited:
- CN-A- 112 172 736
- US-A1- 2013 051 625
- US-A1- 2019 325 603

## Description

### FIELD

The present disclosure relates to a computer implemented method, a computer system and a non-transitory computer readable medium for detecting an occupancy of a seat in a vehicle cabin.

### BACKGROUND

Imaging devices, such as digital cameras, are used in automotive applications to detect seat occupancies in a cabin of a vehicle. However, they tend to consume much computing power and to be unreliable.

US 2019 / 0 325 603 A1 discloses a seated state detection device. US 2013 / 0 051 625 A1 discloses a front seat vehicle occupancy detection via seat pattern recognition.

Accordingly, there is a need to provide an improved computer implemented method, computer system and non-transitory computer readable medium for detecting an occupancy of a seat.

### SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for detecting an occupancy of a seat within a vehicle cabin.

The method comprises to capture an image of the vehicle cabin, to identify a set of characteristics associated with a seat in the captured image, to determine a region associated with the identified seat based on the set of characteristics, wherein the region is configured to cover at least a portion of the seat, and to determine a seat occupancy status of identified seat by processing information obtained from the corresponding region.

In the first step according to the method, an image is captured, by using an imaging device. The imaging device may, for example, be a camera that may be mounted in or on the roof lining, in or on the rear-view mirror or in or on the dashboard of a vehicle, capturing at least a part of the inside of a vehicle cabin.

The vehicle cabin, which may also be identified as a passenger compartment or a passenger cabin, comprises at least one seat, which may be identified as the first seat or in particular the driver's seat, and typically comprises a second, a third, a fourth and a fifth seat. In particular, the vehicle cabin comprises a driver's seat, a front-row passenger's seat and two or three back-row passenger's seats. In particular, all five seats are covered in the captured image.

In a further step according to the method, a set of characteristics associated with a seat is identified in the captured image by using a processing device, such as a microprocessor. In particular, the set of characteristics relate to parts or components of a seat in the cabin, which will be described in more detail below.

In a further step according to the method, a region associated with the identified seat is determined by the processing device based on the set of characteristics. Therein, the region is configured to cover at least a portion of the seat.

In particular, by identifying the characteristics and therefrom the region, a seat is identified.

In another step according to the method, a seat occupancy status of the identified seat is determined by using the processing device, in particular by processing information obtained from the corresponding region. An occupancy status is for example occupied or not occupied.

In particular, the identification of the set of characteristic may be used to train a machine-learning model. Therefore, the machine-learning model may be trained with several images of different vehicle cabins of different cars and/or of different camera types, in which the characteristics are identified. The machine-learning model may then be used in live application for other, in particular new type of vehicle cabins to identify the first and second characteristic.

Through this solution, a method for detecting a seat occupancy is provided, which is adaptable to other vehicles having different vehicle cabins. In particular, by identifying only some characteristic points, the detection rate is highly accurate.

According to an embodiment, the seat occupancy status is determined by comparing the information obtained from the corresponding region with reference information obtained from the corresponding region.

According to an embodiment, the reference information is obtained from at least one previously captured image. In particular, the reference information may be obtained from multiple previously captured images.

According to an embodiment, the set of characteristics comprise a first characteristic and a second characteristic defining the region associated with the seat.

Therein, the location of the first characteristic and the location of the second characteristic together define the region and the region covers a portion of the seat. In particular, the region is spanned from the location of the first characteristic to the location of the second characteristic. Typically, the region covers at least a part or the whole of the back rest area of the seat.

In particular, the first characteristic and the second characteristic are related to the first seat, which may be, as explained above, the driver's seat.

According to an embodiment, the set of characteristics further comprise a third characteristic and a fourth characteristic defining the region associated with the seat in the cabin.

In particular, the third and fourth characteristic may relate to the same, i.e. the first seat, or to a second seat. Further in particular, the four characteristics together may define one region associated with one seat.

Additionally, or alternatively, the third and fourth characteristic may relate to another, i.e. a second seat. Further in particular, the first and second characteristic may define a first region associated with the first seat, and the third and fourth characteristic may define a second region, different from the first region, associated with the second seat.

The second seat is, for example, the center seat of the back row. Therein, a third characteristic and a fourth characteristic related to the second seat may be identified in the image, by using the processing device.

In particular, the location of the third characteristic and the location of the fourth characteristic together define the second region and the second region covers a portion of the second seat. In particular, the second region is spanned from the location of the third characteristic to the location of the fourth characteristic. Typically, the second region covers at least a part or the whole of the back rest area of the second seat.

Optionally, the second region is identified additionally by considering the location of the first and/or second characteristic location.

According to an embodiment, a third region in the image is identified based on the second region, wherein the third region covers a portion of a third seat in the cabin. In particular, the third region is identified using the size and/or location of the second region. Further, the third region may be identified in relation to the second region.

The third region relates to a third seat which may be in particular a left or right seat in the back row of the cabin. Typically, the third region covers at least a part or the whole of the back rest area of the third seat.

Through this embodiment it is possible that the third region can be found without the need to identify further characteristics and in particular their locations.

Additionally, a fourth, fifth, sixth and seventh region may be identified. In particular, the fourth region may relate to the other of the left or right set in the back row of the vehicle cabin, covering at least a part or the whole of the back rest region of the fourth seat and a fifth region may relate to the other passenger set in the front row of the vehicle cabin, covering at least a part or the whole of the back rest region of the fifth seat. The sixth and seventh region may relate to the space from the first seat and the fifth seat, respectively, to the edge of the captured image.

In particular, the first, second, third, fourth, fifth, sixth and seventh region may be identified as a first, second, third, fourth, fifth, sixth and seventh region of interest or a first, second, third, fourth, fifth, sixth and seventh crop in the captured image.

According to an embodiment, the first characteristic defines a first corner of the region, either the first region or the second region, and the second characteristic defines a second corner of the region, which is diagonally opposite to the first corner.

In particular, the first region may be a rectangle and the first characteristic defines a first corner of the first rectangle and the second characteristic defines a second corner of the first rectangle. Therein, the first corner of the first rectangle is diagonally opposite to the second corner of the first rectangle.

In particular, the first characteristic indicates the top right corner of the first rectangle and the second characteristic indicates the bottom left corner of the first rectangle.

Alternatively, the first characteristic indicates the top left corner of the first rectangle and the second characteristic indicates the bottom right corner of the first rectangle.

In another embodiment, the first region is a circle, wherein the first characteristic defines a center point of the circle and the second characteristic defines a radius of the circle. Alternatively, the first characteristic and the second characteristic define opposite points on the circumference of the circle, diagonally connected by the diameter.

Thereby, the first region is well-defined by using only two locations. In particular, when considering the outline of the typically rectangle-shaped image, the four edges of the first rectangle resulting from the diagonally opposite first and second corners may be parallel to the edges of the outline of the image.

According to an embodiment, the third characteristic defines a first edge of the region and the fourth characteristic defines a second edge of the region, which is parallel to the first edge.

In particular, the second region may also be a rectangle and the third characteristic defines a first edge of the second rectangle and the fourth characteristic defines a second edge of the second rectangle. Therein, the first edge of the second rectangle is parallel to the second edge of the second rectangle.

In particular, the third characteristic indicates the top edge of the second rectangle and the fourth characteristic indicates the bottom edge of the second rectangle.

Alternatively, the third characteristic indicates the left edge of the third rectangle and the fourth characteristic indicates the right edge of the first rectangle.

In another embodiment, the second region is a circle, wherein the third characteristic defines a center point of the circle and the fourth characteristic defines a radius of the circle. Alternatively, the third characteristic and the fourth characteristic define opposite points on the circumference of the circle, diagonally connected by the diameter.

Thereby, the second region is well-defined by using only two locations. **In** particular, when considering the outline of the typically rectangle-shaped image, the four edges of the second rectangle resulting from the first and parallel second edge may be parallel to the edges of the outline of the image.

According to an embodiment, the third region has the same size as the second region.

In particular, the third region has the same height and width as the second region. Further in particular, the third region is directly adjacent to the second region.

By defining the third region with the same size as the second region, and in particular by defining the third region as directly adjacent to the second region, the third region can be identified very easily and without consuming much computing power.

In other embodiments, the first region, the second region and/or the third region may have different geometrical shapes, in particular shapes being different from each other. Further in particular, the first, second and third region may have the shape of a polygon or a star or the like.

According to an embodiment, the first characteristic is a seat belt mount of the seat, in particular of the first seat.

The seat belt mount is a mount, typically located on the inside of the B pillar of the vehicle. It is shaped like a bracket, through which the seat belt is guided to be placed on the shoulder of the person sitting in the first seat, in particular the driver's seat. This first characteristic is found in many, if not all cars, and in particular in roughly the same location, and thus can be identified easily in the image.

According to an embodiment, the second characteristic is a seat belt buckle of the seat, in particular of the same first seat.

The seat belt buckle is a fixation means into which the seat belt is inserted and secured on. The seat belt buckle is typically located on the seat side facing the center of the vehicle, usually near the handbrake and thus on the opposite side of the seat as the seat belt mount, and usually at the height of the seat bottom rest. This second characteristic is found in many, if not all cars, and in particular in roughly the same location, and thus can be identified easily in the image.

According to an embodiment, the third characteristic is a top edge of the back rest of the seat. This may be the same first seat or the second seat.

In particular, the third characteristic is the upper horizontal line where the back rest ends. This third characteristic is found in many, if not all cars, and in particular in roughly the same location, and thus can be identified easily in the image.

According to an embodiment, the fourth characteristic is a front edge of the bottom rest of the seat. This may be the same first seat or the second seat.

In particular, the fourth characteristic is the lower horizontal line where the back rest begins from the bottom rest. This fourth characteristic is found in many, if not all cars, and in particular in roughly the same location, and thus can be identified easily in the image.

According to an embodiment, the method further comprises to identify, by means of the processing device, a first sub-region based on the region, in particular the first region, and to identify, by means of the processing device, a type of occupancy of the seat, in particular the first seat, based on the first sub-region.

The first sub-region has a different size, in particular a different height and/or width, and/or is offset from the center point of the first region by a predetermined and/or predefined amount. The first sub-region is particularly adapted to the particular type of occupation of the first seat, for example, a person, a small object or a child's seat. The type of occupancy can in particular be identified by using a classification algorithm on the particular first sub-region.

According to an embodiment, the method further comprises to identify, by means of the processing device, a second sub-region based on the region, in particular the first region, and to identify, by means of the processing device, a type of occupancy of the seat, in particular the first seat, based on the second sub-region.

The second sub-region has a different size, in particular a different height and/or width, and/or is offset from the center point of the first region and/or the first sub-region by a predetermined and/or predefined amount. The second sub-region is particularly adapted to the particular type of occupation of the first seat, for example, a person, a small object or a child's seat. The type of occupancy can in particular be identified by using a classification algorithm on the particular second sub-region.

It goes without saying the further sub-region may be identified with respect to the first region, in particular, a third, fourth and fifth sub-region. Additionally, a first, second, third, fourth and/or fifth sub-region may be identified with respect to the second, third, fourth, fifth, sixth and/or seventh region.

According to an embodiment, the method further comprises to identify, by means of the processing device, a first reference body point in the first sub-region and to identify, by means of the processing device, a type of occupancy of the first seat based on the first reference body point.

In another aspect, the present disclosure is directed at a computer system, said computer system being configured to carry out several or all steps of the computer implemented method described herein.

The computer system may comprise a processing device, at least one memory device and at least one non-transitory data storage. The non-transitory data storage and/or the memory device may comprise a computer program for instructing the computer to perform several or all steps or aspects of the computer implemented method described herein.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

### DRAWINGS

Exemplary embodiments and functions of the present disclosure are described herein in conjunction with the following drawings, showing schematically:
- Fig. 1: a view of a computer system for detecting an occupancy of a seat;
- Fig. 2: a flow chart of a computer implemented method for detecting an occupancy of a seat, in particular by using the computer system of Fig. 1;
- Fig. 3: an image of a vehicle cabin as identified by the method as shown in Fig. 2;
- Fig. 4: a flow chart of a computer implemented method for detecting a type of occupancy of a seat, in particular by using the computer system of Fig. 1;
- Fig. 5: an image of a vehicle cabin with a type of occupancy identified by the method as shown in Fig. 4;
- Fig. 6: an image of a vehicle cabin with a type of occupancy identified by the method as shown in Fig. 4;
- Fig. 7: an image of a vehicle cabin with a type of occupancy identified by the method as shown in Fig. 4;
- Fig. 8a: an image of a vehicle cabin with a type of occupancy identified by the method as shown in Fig. 4; and
- Fig. 8b: a detail of Fig. 8a.

### DETAILED DESCRIPTION

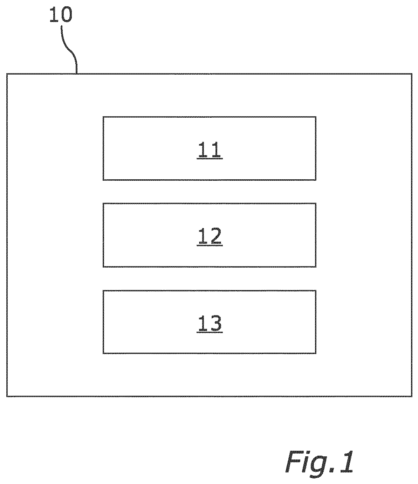

Fig. 1 depicts a view of a computer system 10 for detecting an occupancy of a seat within a vehicle cabin. The computer system 10 comprises a processing device 11, an imaging device 12 and a memory device 13.

The computer system 10 is adapted to perform a method for detecting an occupancy of a seat in the vehicle cabin. Therefore, the imaging device 12 is adapted to capture an image of the vehicle cabin. The processing device 11 is adapted to determine one or more seats in the vehicle cabin by processing the captured image, to identify a set of characteristics associated with each seat in the vehicle cabin in the image, to determine a region associated with each of the detected seats based on the set of characteristics, wherein each region is configured to cover a portion of the seat and to determine a seat occupancy status by processing information obtained from the corresponding region.

The method will be described in greater detail with respect to the following figures.

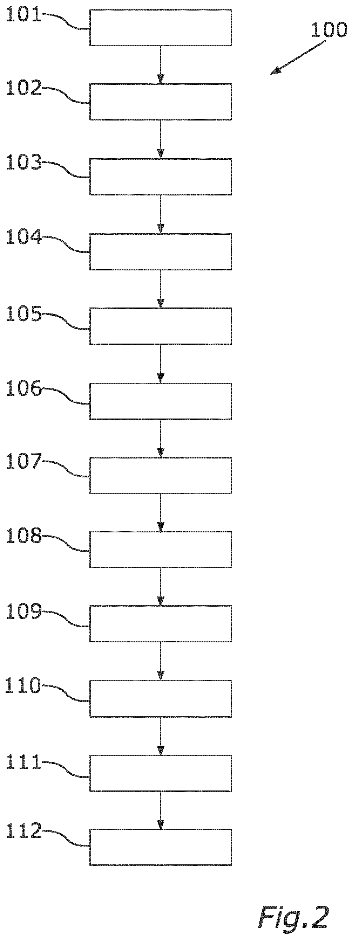

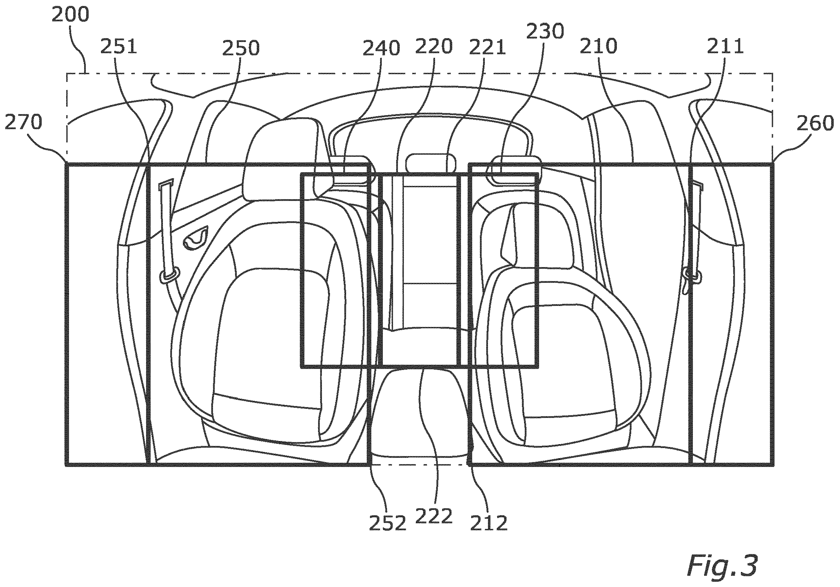

Fig. 2 shows a flow chart of a computer implemented method 100 for detecting an occupancy of a seat. The results of the steps 101 to 111 are shown in Fig. 3.

Therein, the method starts in step 101, in which capturing, by means of an imaging device, an image 200 of a vehicle cabin.

In a next step 102, a first characteristic and a second characteristic related to a first seat in the vehicle cabin in the image are identified. Therein, the first characteristic is a seat belt mount of the first seat and the second characteristic is a seat belt buckle of the first seat.

In a further step 103, a first region being a first rectangle 210 in the image is identified, wherein the location of the first characteristic defines a first corner 211 of the first rectangle 210 and the location of the second characteristic defines a second corner 212 of the first rectangle 210, diagonally opposite of the first characteristic. Therein the first rectangle 210 covers a portion of the first seat, which is the driver's seat of the front row of the vehicle cabin. As can be seen in Fig. 3, the four edges of the first rectangle 210 are parallel to the frame or outline of the captured image 200.

In another step 104, a third characteristic and a fourth characteristic related to a first seat in the vehicle cabin in the image are identified. Therein, the third characteristic is a top edge of the back rest of the second seat and the fourth characteristic is a front edge of the bottom rest of the second seat.

In a further step 105, a second region being a second rectangle 220 in the image is identified, wherein the location of the third characteristic defines a first edge 221 of the second rectangle 220 and the location of the fourth characteristic defines a second edge 222 of the second rectangle 220 parallel to the first edge 221. Therein the second rectangle 220 covers a portion of the second seat, which is the center seat in the back row of the vehicle cabin. As can be seen in Fig. 3, the four edges of the second rectangle 220 are parallel to the frame or outline of the captured image. In particular, the first edge 221 of the second rectangle 220 is parallel to the top edge of the image 200 and the second edge 222 is parallel to the bottom edge of the image 200.

In another step 106, a third region being a third rectangle 230 is identified in the image based on the second rectangle 220, wherein the third rectangle 230 covers a portion of a third seat in the vehicle cabin, which is the right seat in the back row of the vehicle cabin. Therein, the third rectangle 230 has the same size as the second rectangle 220 and shares the same side edge with the second rectangle 220. In particular, the third rectangle 230 is a mirrored form of the second rectangle 220 around the right side edge of the second rectangle 220. As can be seen in Fig. 3, the four edges of the third rectangle 230 are parallel to the frame or outline of the captured image.

In another step 107, a fourth region being a fourth rectangle 240 is identified based on the second rectangle, wherein the fourth rectangle 240 covers a portion of a fourth seat in the vehicle cabin, which is the left seat in the back row of the vehicle cabin. Therein, the fourth rectangle 240 has the same size as the second rectangle 220 and the third rectangle 230 and shares the same side edge with the second rectangle 220. In particular, the fourth rectangle 240 is a mirrored form of the second rectangle 220 around the left side edge of the second rectangle 220. As can be seen in Fig. 3, the four edges of the fourth rectangle 240 are parallel to the frame or outline of the captured image 200.

In a further step 108, a fifth characteristic and a sixth characteristic related to a fifth seat in the vehicle cabin in the image are identified. Therein, the fifth characteristic is a seat belt mount of the fifth seat and the sixth characteristic is a seat belt buckle of the fifth seat.

In another step 109, a fifth region being a fifth rectangle 250 in the image is identified, wherein the location of the fifth characteristic defines a first corner 251 of the fifth rectangle and the location of the sixth characteristic defines a second corner 252 of the fifth rectangle, diagonally opposite of the fifth characteristic. Therein the fifth rectangle covers a portion of the fifth seat, which is the passenger's seat of the front row of the vehicle cabin. As can be seen in Fig. 3, the four edges of the fifth rectangle 250 are parallel to the frame or outline of the captured image 200.

In a further step 110, a sixth region being a third rectangle 260 is identified based on the first rectangle 210, wherein the sixth rectangle 260 covers a portion to the right of the first seat in the vehicle cabin. Therein, the sixth 260 rectangle shares the same side edge with the first rectangle 210, in particular the right side edge of the first rectangle 210 and extends until the right edge of the image, covering the entrance region around the driver's door and the B pillar.

Similarly, in another step 111 a seventh region being a third rectangle 270 is identified based on the fifth rectangle 250, wherein the seventh rectangle 270 covers a portion to the left of the fifth seat in the vehicle cabin. Therein, the seventh rectangle 270 shares the same side edge with the fifth rectangle 250, in particular the left side edge of the fifth rectangle 250 and extends until the left edge of the image, covering the entrance region around the passenger's door and the B pillar.

The step 102, 104 and/or 108 may be done in particular by using a trained machine-learning model.

Needless to say, that the order of the steps 102 and 103, 104 and 105, 106, 107, 108 and 109, 110 as well as 111 may be performed in a different order and/or simultaneously. In particular, it is possible that the steps 102 and 108 are performed at the same time in a first instance and the steps 103 and 109 at the same time in a second instance, then step 104 followed by 105, then 106 and 107 at the same time followed by 110 and 111 at the same time.

In a further step 112, an occupancy of the first, second, third, fourth and/or fifth seat is identified based on the first, second, third, fourth and fifth rectangle 210, 220, 230, 240, 250. Further, by identifying an occupancy of the sixth or seventh rectangle 260, 270, it is possible to detect whether a person enters or exits the vehicle cabin. Detecting the occupancy of a rectangle may be done by comparing the rectangles with empty rectangles of a previously captured image.

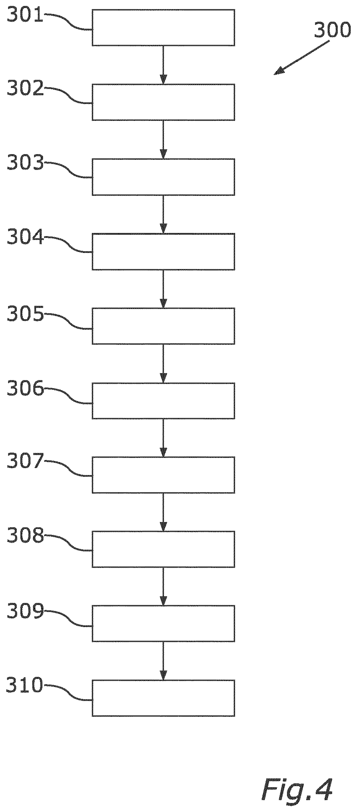

After having identified the total of seven rectangles in the captured image, and the occupancies of the first to fifth seat, the method 100 can proceed the steps shown in Fig. 4.

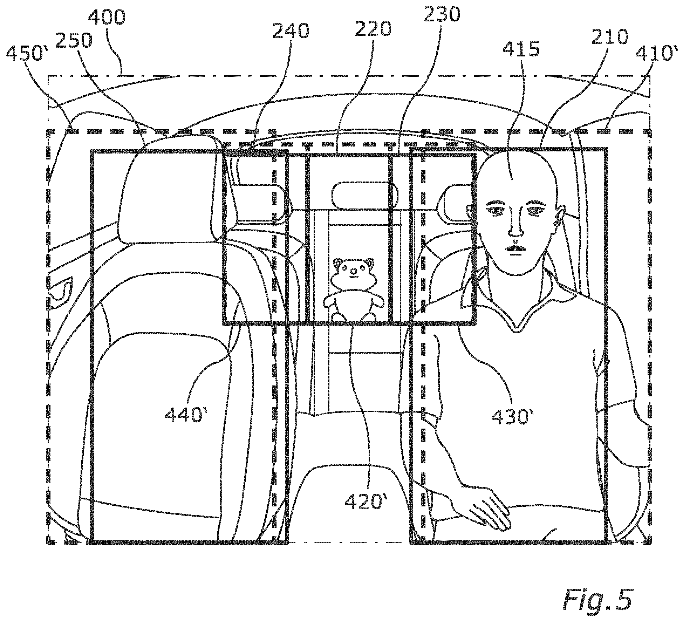

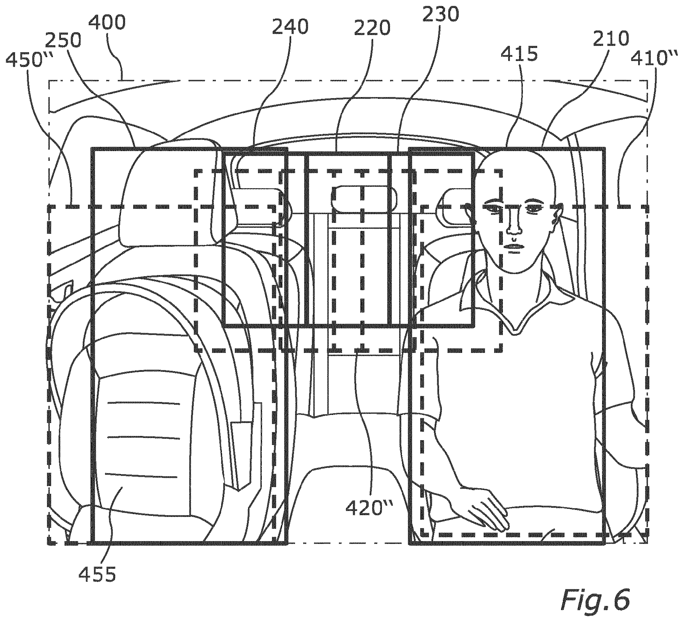

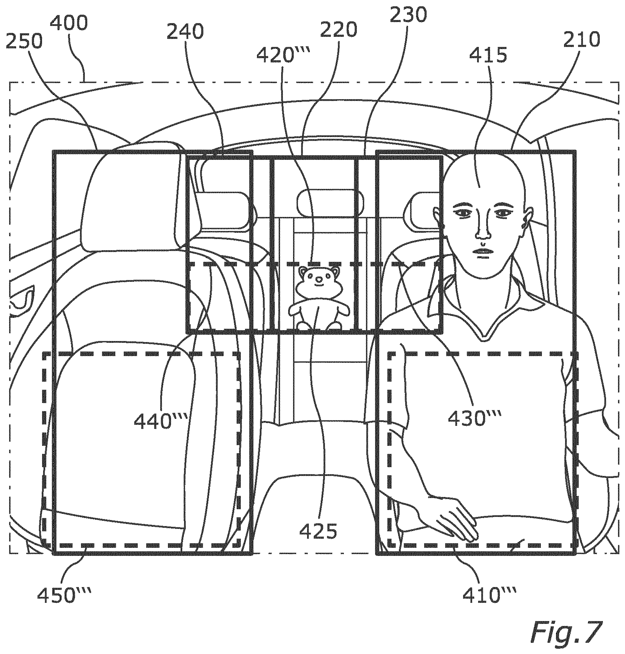

Fig. 4 shows a flow chart of a computer implemented method for detecting a type of occupancy of a seat, as shown in conjunction with Fig. 5, 6, 7 and 8, in particular after previously identifying the rectangles of the seats as shown in Fig. 2 and 3.

As can be seen from Fig. 5, Fig. 6 and Fig. 7, the image 400 shows a different type of vehicle cabin, which is why the rectangles 210, 220, 230, 240 and 250 are at different positions and have different sizes as shown in comparison to Fig. 3.

In a first step 301, first sub-regions being sub-rectangles 410' 420', 430', 440', indicated with a dashed line, are identified based on the rectangles 210, 220, 230, 240 and 250, indicated with a solid line, as previously identified.

In particular, a first sub-rectangle 410' is identified based on the location and size of the first rectangle 210, a first sub-rectangle 420' is identified based on the location and size of the second rectangle 220, a first sub-rectangle 430' is identified based on the location and size of the third rectangle 230, a first sub-rectangle 440' is identified based on the location and size of the fourth rectangle 240 and a first sub-rectangle 450' is identified based on the location and size of the fifth rectangle 250.

Therein, the first sub-rectangles 410' 420', 430', 440' and 450' relate to the identification of a person 415. Therefore, the first sub-rectangles 410' 420', 430', 440' and 450' are larger in size, in particular in height than the respective rectangles 210, 220, 230, 240 and 250 and/or offset from the center thereof. The type of occupation in the first sub-rectangles, if any, is then identified in a further step 302, in particular by using a classifier algorithm for persons.

In a further step 303, second sub-rectangles 410" 420", 430", 440" and 450", indicated with a dashed line, are identified based on the rectangles 210, 220, 230, 240 and 250, indicated with a solid line, as previously identified.

In particular, a second sub-rectangle 410" is identified based on the location and size of the first rectangle 210, a second sub-rectangle 420" is identified based on the location and size of the second rectangle 220, a second sub-rectangle 430" is identified based on the location and size of the third rectangle 230, a second sub-rectangle 440" is identified based on the location and size of the fourth rectangle 240 and a second sub-rectangle 450" is identified based on the location and size of the fifth rectangle 250.

Therein, the second sub-rectangles 410" 420", 430", 440" and 450" relate to identification of a child's seat 455. Therefore, the second sub-rectangles 410" 420", 430", 440" and 450" are smaller in height and larger in width than the respective rectangles 210, 220, 230, 240 and 250 and/or offset from the center thereof. The type of occupation in the second sub-rectangles, if any, is then identified in a further step 304, in particular by using a classifier algorithm for child's seats.

In a further step 305, third sub-rectangles 410"', 420"', 430"', 440"' and 450"', indicated with a dashed line, are identified based on the rectangles 210, 220, 230, 240 and 250, indicated with a solid line, as previously identified.

In particular, a third sub-rectangle 410"' is identified based on the location and size of the first rectangle 210, a third sub-rectangle 420"' is identified based on the location and size of the second rectangle 220, a third sub-rectangle 430"' is identified based on the location and size of the third rectangle 230, a third sub-rectangle 440"' is identified based on the location and size of the fourth rectangle 240 and a third sub-rectangle 450"' is identified based on the location and size of the fifth rectangle 250.

Therein, the third sub-rectangles 410"' 420"', 430"', 440"' and 450"' relate to identification of a small objects 425, such as a teddy bear. Therefore, the third sub-rectangles 410"' 420"', 430"', 440"' and 450" are smaller in height and/ or in width than the respective rectangles 210, 220, 230, 240 and 250 and/or offset from the center thereof. The type of occupation in the third sub-rectangles, if any, is then identified in a further step 306, in particular by using a classifier algorithm for small objects.

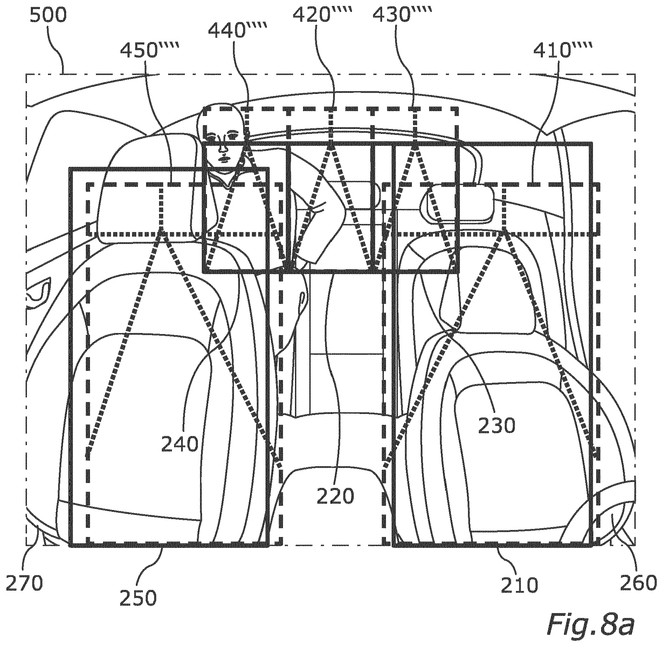

As can be seen from Fig. 8a the image 500 shows yet again a different type of vehicle cabin, which is why the rectangles 210, 220, 230, 240 and 250 are at different positions and have different sizes as shown in comparison to Fig. 3 and Fig. 5, 6 and 7, respectively.

In a further step 307 of the method 300, fourth sub-rectangles 410"", 420"", 430"", 440"" and 450"", indicated by a dashed line, are identified based on the rectangles 210, 220, 230, 240 and 250, indicated with a solid line, as previously identified.

In particular, a fourth sub-rectangle 410"" is identified based on the location and size of the first rectangle 210, a fourth sub-rectangle 420"" is identified based on the location and size of the second rectangle 220, a fourth sub-rectangle 430"" is identified based on the location and size of the third rectangle 230, a fourth sub-rectangle 440'''' is identified based on the location and size of the fourth rectangle 240 and a fourth sub-rectangle 450"" is identified based on the location and size of the fifth rectangle 250.

Therein, the fourth sub-rectangles 410'''' 420"", 430"", 440"" and 450"' relate to identification of a body points of a person. Therefore, the fourth sub-rectangles 410'''' 420"", 430"", 440"" and 450"' are different in height and/ or in width than the respective rectangles 210, 220, 230, 240 and 250 and/or offset from the center thereof.

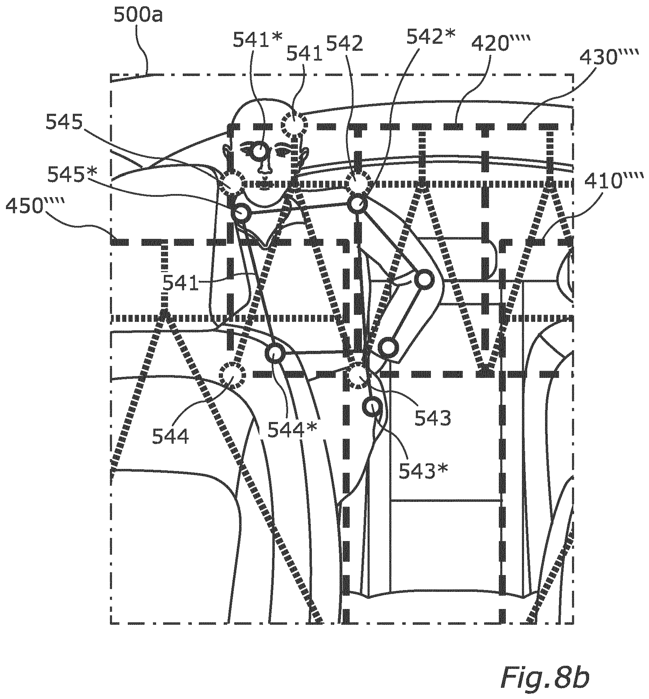

Then, in a further step 308, reference body points are identified in the respective fourth sub-rectangles 410"" 420"", 430"", 440'''' and 450"'. These are not identified with a reference numeral for visibility reasons in Fig. 8a and will be described with further detail in relation to Fig. 8b, which shows a detail 500a of the image 500 as shown in Fig. 8a.

In particular, as can be seen from Fig. 8b, a total of five reference body points, indicated by a dotted line, are identified in the fourth sub-rectangle 440"" of the fourth rectangle, the latter of which is not shown due to visibility reasons. There is a first reference body point 541, relating to the nose of a person, a second reference body point 542, relating to a left shoulder of a person, a third reference body point 543, relating to a left knee of a person, a fourth reference body point 544, relating to a right knee of a person and a fifth reference body point 545, relating to a right shoulder of the person.

The reference body points are all located on the rectangle outline and are connected by dotted lines. In particular, the reference body points correspond to the positions where actual body points of a person sitting in the respective seat would be located.

In addition, in another step 309, body points of the person sitting in the fourth seat are identified. In particular, a first body point 541*, relating to the nose of a person, a second reference body point 542*, relating to a left shoulder of a person, a third reference body point 543*, relating to a left knee of a person, a fourth reference body point 544*, relating to a right knee of a person and a fifth reference body point 545*, relating to a right shoulder of the person are identified in the image. Other body points are also identified, in particular relating to the left arm of the person. However, in this embodiment they are not considered relevant.

In a further step 310, a type of occupancy of the first seat based on the reference body points and the body points is identified. In particular, it is identified, if there is a person sitting in the respective seat based on the reference body points, for example by the respective distance of the body points to the reference body points.

### Reference numeral list

- 10: computer system
- 11: processing device
- 12: an imaging device
- 13: memory device
- 100: method
- 101: method step
- 102: method step
- 103: method step
- 104: method step
- 105: method step
- 106: method step
- 107: method step
- 108: method step
- 109: method step
- 110: method step
- 111: method step
- 112: method step
- 200: image
- 210: first rectangle
- 211: first corner
- 212: second corner
- 220: second rectangle
- 221: first edge
- 222: second edge
- 230: third rectangle
- 240: fourth rectangle
- 250: fifth rectangle
- 251: first corner
- 252: second corner
- 300: method
- 301: method step
- 302: method step
- 303: method step
- 304: method step
- 305: method step
- 306: method step
- 307: method step
- 308: method step
- 309: method step
- 310: method step
- 400: image
- 410': first sub-rectangle
- 410": second sub-rectangle
- 410"': third sub-rectangle
- 410"": fourth sub-rectangle
- 420': first sub-rectangle
- 420": second sub-rectangle
- 420"': third sub-rectangle
- 420"": fourth sub-rectangle
- 430': first sub-rectangle
- 430": second sub-rectangle
- 430"': third sub-rectangle
- 430"": fourth sub-rectangle
- 440': first sub-rectangle
- 440": second sub-rectangle
- 440"': third sub-rectangle
- 440"": fourth sub-rectangle
- 450': first sub-rectangle
- 450": second sub-rectangle
- 450"': third sub-rectangle
- 450"": fourth sub-rectangle
- 500: image
- 500a: image detail
- 541: first reference body point
- 541*: first body point
- 542: second reference body point
- 542*: second body point
- 543: third reference body point
- 543*: third body point
- 544: fourth reference body point
- 544*: fourth body point
- 545: fifth reference body point
- 545*: fifth body point

## Claims

1. Computer implemented method (100) for detecting an occupancy of a seat within a vehicle cabin,
the method comprising:
- capturing (101), by means of an imaging device (12), an image (200) of the vehicle cabin;
- identifying (102), by means of a processing device (11), a set of characteristics associated with a seat in the captured image (200), wherein the set of characteristics comprises a first characteristic and a second characteristic defining a region associated with the seat and wherein the first characteristic is a seat belt mount of the seat and the second characteristic is a seat belt buckle of the seat;
- determining (103), by means of the processing device (11), the region associated with the identified seat based on the set of characteristics, wherein the region is configured to cover at least a portion of the seat; and
- determining (112) a seat occupancy status of the seat by processing information obtained from the corresponding region.

2. Computer implemented method (100) according to claim 1, wherein the seat occupancy status is determined by comparing the information obtained from the corresponding region with reference information obtained from the corresponding region.

3. Computer implemented method (100) according to the preceding claim 2, wherein the reference information is obtained from at least one previously captured image.

4. Computer implemented method (100) according to claim 3, wherein the first characteristic defines a first corner of the region and the second characteristic defines a second corner of the region; and wherein the first corner of the is diagonally opposite to the second corner.

5. Computer implemented method (100) according to any one of the preceding claims 3 or 4, wherein the third characteristic defines a first edge of the region and the fourth characteristic defines a second edge of the region; and wherein the first edge is parallel to the second edge.

6. Computer implemented method (100) according to any one of the preceding claims 3 to 5, wherein the third characteristic is a top edge of the back rest of the seat and/or the fourth characteristic is a front edge of the bottom rest of the seat.

7. Computer implemented method (100) according to any one of the preceding claims 1 to 6, the method further comprising:
- identifying, by means of the processing device (11), a sub-region based on the region; and
- determining, by means of the processing device (11), a type of occupancy of the seat based on the first sub-region.

8. Computer implemented method (100) according to the preceding claim 7, the method further comprising:
- identifying, by means of the processing device (11), a second sub-region based on the region; and
- determining, by means of the processing device (11), a type of occupancy of the seat based on the second sub-region.

9. Computer implemented method (100) according to any one of the preceding claims 7 or 8, the method further comprising:
- identifying, by means of the processing device (11), a reference body point in the first sub-region; and
- determining, by means of the processing device (11), a type of occupancy of the seat based on the reference body point.

10. Computer system (10), the computer system (10) being configured to carry out the computer implemented method (100) of any one of the preceding claims 1 to 9**.**

11. Non-transitory computer readable medium comprising instructions for carrying out the computer implemented method (100) of any one of the preceding claims 1 to 9.

## Patentansprüche

1. Computerimplementiertes Verfahren (100) zum Erkennen einer Belegung eines Sitzes in einer Fahrzeugkabine,
wobei das Verfahren umfasst:
- Aufnehmen (101) eines Bildes (200) der Fahrzeugkabine mittels einer Bildgebungsvorrichtung (12);
- Identifizieren (102) eines Satzes von Merkmalen, die einem Sitz in dem aufgenommenen Bild (200) zugeordnet sind, mittels einer Verarbeitungsvorrichtung (11), wobei der Satz von Merkmalen ein erstes Merkmal und ein zweites Merkmal umfasst, die einen Bereich definieren, der dem Sitz zugeordnet ist, und wobei das erste Merkmal eine Sitzgurtbefestigung des Sitzes ist und das zweite Merkmal ein Sitzgurtschloss des Sitzes ist;
- Bestimmen (103) des Bereichs, der dem identifizierten Sitz zugeordnet ist, basierend auf dem Satz von Merkmalen mittels der Verarbeitungsvorrichtung (11), wobei der Bereich konfiguriert ist, um mindestens einen Abschnitt des Sitzes abzudecken; und
- Bestimmen (112) eines Sitzbelegungsstatus des Sitzes durch Verarbeiten von Informationen, die von dem entsprechenden Bereich erhalten werden.

2. Computerimplementiertes Verfahren (100) nach Anspruch 1,
wobei der Sitzbelegungsstatus durch Vergleichen der Informationen, die von dem entsprechenden Bereich erhalten werden, mit Referenzinformationen, die von dem entsprechenden Bereich erhalten werden, bestimmt wird.

3. Computerimplementiertes Verfahren (100) nach Anspruch 2,
wobei die Referenzinformationen von mindestens einem zuvor aufgenommenen Bild erhalten werden.

4. Computerimplementiertes Verfahren (100) nach Anspruch 3,
wobei das erste Merkmal eine erste Ecke des Bereichs definiert und das zweite Merkmal eine zweite Ecke des Bereichs definiert; und
wobei die erste Ecke der zweiten Ecke diagonal gegenüberliegt.

5. Computerimplementiertes Verfahren (100) nach einem der Ansprüche 3 oder 4,
wobei das dritte Merkmal einen ersten Rand des Bereichs definiert und das vierte Merkmal einen zweiten Rand des Bereichs definiert; und
wobei der erste Rand parallel zu dem zweiten Rand ist.

6. Computerimplementiertes Verfahren (100) nach einem der Ansprüche 3 bis 5,
wobei das dritte Merkmal ein oberer Rand der Rückenlehne des Sitzes ist und/oder das vierte Merkmal ein vorderer Rand der Unterlehne des Sitzes ist.

7. Computerimplementiertes Verfahren (100) nach einem der Ansprüche 1 bis 6,
wobei das Verfahren ferner umfasst:
- Identifizieren eines Teilbereichs basierend auf dem Bereich mittels der Verarbeitungsvorrichtung (11); und
- Bestimmen eines Belegungstyps des Sitzes basierend auf dem ersten Teilbereich mittels der Verarbeitungsvorrichtung (11).

8. Computerimplementiertes Verfahren (100) nach Anspruch 7,
wobei das Verfahren ferner umfasst:
- Identifizieren eines zweiten Teilbereichs basierend auf dem Bereich mittels der Verarbeitungsvorrichtung (11); und
- Bestimmen eines Belegungstyps des Sitzes basierend auf dem zweiten Teilbereich mittels der Verarbeitungsvorrichtung (11).

9. Computerimplementiertes Verfahren (100) nach einem der Ansprüche 7 oder 8,
wobei das Verfahren ferner umfasst:
- Identifizieren eines Referenzkörperpunkts in dem ersten Teilbereich mittels der Verarbeitungsvorrichtung (11); und
- Bestimmen eines Belegungstyps des Sitzes basierend auf dem Referenzkörperpunkt mittels der Verarbeitungsvorrichtung (11).

10. Computersystem (10), wobei das Computersystem (10) konfiguriert ist, um das computerimplementierte Verfahren (100) nach einem der Ansprüche 1 bis 9 auszuführen.

11. Nichtflüchtiges computerlesbares Medium, das Anweisungen zum Ausführen des computerimplementierten Verfahrens (100) nach einem der Ansprüche 1 bis 9 umfasst.

## Revendications

1. Procédé mis en œuvre par ordinateur (100) pour détecter une occupation d'un siège dans un habitacle de véhicule, le procédé consistant à :
- capturer (101), au moyen d'un dispositif d'imagerie (12), une image (200) de l'habitacle de véhicule ;
- identifier (102), au moyen d'un dispositif de traitement (11), un ensemble de caractéristiques associées à un siège dans l'image capturée (200), dans lequel l'ensemble de caractéristiques comprend une première caractéristique et une deuxième caractéristique définissant une région associée au siège et dans lequel la première caractéristique est un support de ceinture de sécurité du siège et la deuxième caractéristique est une boucle de ceinture de sécurité du siège ;
- déterminer (103), au moyen du dispositif de traitement (11), la région associée au siège identifié sur la base de l'ensemble de caractéristiques, dans lequel la région est configurée pour couvrir au moins une partie du siège ; et
- déterminer (112) un état d'occupation du siège en traitant les informations obtenues à partir de la région correspondante.

2. Procédé mis en œuvre par ordinateur (100) selon la revendication 1,
dans lequel l'état d'occupation du siège est déterminé en comparant les informations obtenues à partir de la région correspondante avec des informations de référence obtenues à partir de la région correspondante.

3. Procédé mis en œuvre par ordinateur (100) selon la revendication 2 précédente,
dans lequel les informations de référence sont obtenues à partir d'au moins une image précédemment capturée.

4. Procédé mis en œuvre par ordinateur (100) selon la revendication 3,
dans lequel la première caractéristique définit un premier coin de la région et la deuxième caractéristique définit un deuxième coin de la région ; et
dans lequel le premier coin de la région est diagonalement opposé au deuxième coin.

5. Procédé mis en œuvre par ordinateur (100) selon l'une quelconque des revendications 3 ou 4 précédentes,
dans lequel la troisième caractéristique définit un premier bord de la région et la quatrième caractéristique définit un deuxième bord de la région ; et
dans lequel le premier bord est parallèle au deuxième bord.

6. Procédé mis en œuvre par ordinateur (100) selon l'une quelconque des revendications 3 à 5 précédentes,
dans lequel la troisième caractéristique est un bord supérieur du dossier du siège et/ou la quatrième caractéristique est un bord avant de l'assise du siège.

7. Procédé mis en œuvre par ordinateur (100) selon l'une quelconque des revendications 1 à 6 précédentes, le procédé consistant en outre à :
- identifier, au moyen du dispositif de traitement (11), une sous-région sur la base de la région ; et
- déterminer, au moyen du dispositif de traitement (11), un type d'occupation du siège sur la base de la première sous-région.

8. Procédé mis en œuvre par ordinateur (100) selon la revendication 7 précédente, le procédé consistant en outre à :
- identifier, au moyen du dispositif de traitement (11), une deuxième sous-région sur la base de la région ; et
- déterminer, au moyen du dispositif de traitement (11), un type d'occupation du siège sur la base de la deuxième sous-région.

9. Procédé mis en œuvre par ordinateur (100) selon l'une quelconque des revendications 7 ou 8 précédentes, le procédé consistant en outre à :
- identifier, au moyen du dispositif de traitement (11), un point de référence du corps dans la première sous-région ; et
- déterminer, au moyen du dispositif de traitement (11), un type d'occupation du siège sur la base du point de référence du corps.

10. Système informatique (10), le système informatique (10) étant configuré pour exécuter le procédé mis en œuvre par ordinateur (100) selon l'une quelconque des revendications 1 à 9 précédentes.

11. Support informatique non transitoire comprenant des instructions pour exécuter le procédé mis en œuvre par ordinateur (100) selon l'une quelconque des revendications 1 à 9 précédentes.
